Europäisches Patentamt

**European Patent Office**

Office européen des brevets

(11) Publication number: **0 078 135**
**A1**

## (12) EUROPEAN PATENT APPLICATION

(21) Application number: **82305490.3**

(22) Date of filing: **15.10.82**

(51) Int. Cl.³: **C 03 B 29/04**
**G 05 D 23/24**

(30) Priority: **23.10.81 US 314277**

(43) Date of publication of application:
**04.05.83 Bulletin 83/18**

(84) Designated Contracting States:
**AT BE CH DE FR GB IT LI LU NL SE**

(71) Applicant: **McMaster, Harold Ashley**
**707 Riverside Drive**
**Woodville Ohio 43469(US)**

(72) Inventor: **McMaster, Harold Ashley**
**707 Riverside Drive**
**Woodville Ohio 43469(US)**

(74) Representative: **Meeks, Frank Burton et al,**
**Urquhart-Dykes & Lord 47 Marylebone Lane**
**London W1M 6DL(GB)**

(54) **Method of controlling the heating of sheet material in a conveyor furnace.**

(57) A method of controlling the heating of sheet material within a furnace (12) including a number of electric resistive heating elements (34) which are variably loaded by the sheet material. The instantaneous resistances of the heating elements (34) are digitally computed and compared with corresponding reference resistances of the heating elements (34) to control the electrical power received by the heating elements (34) to heat the sheet material uniformly.

Fig. 1

EP 0 078 135 A1

METHOD OF CONTROLLING THE HEATING
OF SHEET MATERIAL IN A CONVEYOR FURNACE

TECHNICAL FIELD

This invention relates to methods of controlling the heating of glass sheets and other sheet material such as fused silica in furnaces including a conveyor in preparation for a processing operation such as tempering, bending, bending and tempering, or filming, etc.

BACKGROUND ART

United States Patents 3,806,312; 3,934,970; 3,947,242; and 3,994,711 disclose furnaces including roller conveyors for heating glass sheets while conveyed in a generally horizontal orientation through an associated heating chamber. Convection between both the top and bottom surfaces of the conveyed glass sheets and the gas within the heating chamber performs a certain extent of the heating. Conduction between heated rolls of the conveyor and the bottom surface of each conveyed glass sheet also provides some of the heating. In addition, the preferred construction of these furnaces utilizes electric resistance elements both above and below the conveyor rolls such that both the top and bottom surfaces are also heated by radiation. Of course, the rolls shield the bottom surface of each glass sheet to some degree from the resistance elements located below the conveyor and thereby decrease the radiant energy that is transferred to the glass.

It is important to maintain glass sheets generally planar during heating on roller conveyors regardless of whether the final product is to be flat glass for architectural use or bent glass such as used with vehicles. Flat glass is usually tempered or is first coated with a metal film and then tempered by rapid cooling of the heated glass sheet which cannot deviate too much from a planar condition if the final product is to be flat. Depending upon the type of bending equipment utilized, it can be difficult to provide an accurate control of the shape of bent glass if the heated glass sheet deviates from a planar condition by too great an extent. Unequal heating of top and bottom surfaces of glass sheets such as can take place on roller conveyors can result in deviation from a planar condition since greater heating of one surface will cause greater expansion thereof than the other surface.

Heating of glass sheets to a desired temperature for processing is most preferably performed as rapidly and as accurately as possible so as to provide such heating with minimal energy input.

Another problem in heating glass for tempering is overheating of the edges of the glass by partially loaded heating elements located beyond the glass edges. If all areas of all of the heating elements are given equal power input, then those elements which are partially loaded will overheat and, in turn, will overheat the glass edges.  Conversely, if all areas of the heating element are maintained at a convenient temperature regardless of load, the glass will be uniformly heated.

One method of measuring the temperature of a heating zone or chamber is to employ thermocouple controls which extend through the furnace walls.  Such thermocouple controls tend to resonate with the glass and the spaces between the glass on a continuous conveyor.  One problem with such thermocouples is that such a temperature sensor comprises basically a single point source for detecting the heat within the heating or control zone which may be ten or more feet long.  Such thermocouples also become easily contaminated and cause heat loss about such thermocouple through the furnace walls.  Also, such thermocouples are relatively expensive and require careful handling to prevent breakage.

Another method of measuring the temperature within the furnace to thereafter control the amount of electrical power received by the heating elements is through the use of a radiation pyrometer.  Typically, a radiation pyrometer is held against a transparent window extending through a side wall of the furnace.  However, there are many disadvantages with the use of such a pyrometer.  Operator intervention is required which hinders the frequency and reliability under which such measurements can take place. Also, typically, the path along which the pyrometer senses, can become obstructed by fumes within the furnace or by a clouded viewing window.

One possible solution is to utilize the electrically resistive heating elements themselves as temperature sensors. The resistance of such heating elements is proportional to the temperature of such heating elements and therefore the temperature of the heating elements can be correlated with the resistances of the heating elements. Variations of resistance with the temperature of each heating element is a stable relationship over long periods of time and provides a reliable parameter for temperature control without the use of analog sensors such as thermocouple controls which need frequent calibration.

The resistance of such heating elements and therefore the temperature can be determined by measuring the energized voltage and corresponding energizing current for the heating element. Such a procedure or method is shown by numerous prior art patents such as United States Patents to Cahill et al 3,752,956; Orosy et al 3,789,190; Sebens et al 4,162,379; Obersby 3,585,267 and Varrasso 3,984,611. The Varrasso patent discloses a method of anticipating electrode failure by monitoring the current, voltage and resistance between electrode pairs in a Joule effect heating system.

P-349 - 5 -

## DISCLOSURE OF THE INVENTION

An object of the present invention is to provide accurately controlled heating of material on a conveyor so as to maintain the generally planar condition of the sheet material during heating.

Another object of the invention is to maintain all areas of variably loaded electric resistive heating elements within a conveyor furnace at a constant temperature during conveyance of glass sheets in the conveyor furnace, or where the glass sheets are stationary within a furnace, in order to provide uniform heating of the glass sheets to a desired temperature and controlling the heat beyond the areas covered by the load.

Yet another object of the invention is to provide accurately controlled heating of sheet material by resistive heating elements which also serve as sensors which are as long as the control zone in which the sheet material is heated and lessen the need for rate, reset, droop correction, etc.

In carrying out the above objects as well as other objects, a method is disclosed for controlling the heating of glass sheets in a glass sheet heating furnace, including a housing defining a heating chamber and having at least two electric resistive heating elements supported by the housing within the heating chamber. The method includes the steps of determining a reference value of resistance for each of the heating elements when the heating
elements are heated to a desired heating temperature, energizing the heating elements, sequentially obtaining an instantaneous value of
the voltage drop across each of the energized
heating elements and sequentially obtaining an
instantaneous value of the current flow through
each of the energized heating elements. Also
included are the steps of correlating the instantaneous values of the voltage and current
for the same heating element to obtain the instantaneous value of resistance for each of
the heating elements, comparing each of the
instantaneous resistances with its corresponding
reference value of resistance and automatically
regulating the electrical power applied to each
of the heating elements in response to its corresponding step of comparing to thereby maintain
a resistance of each of said heating elements
at its reference value of resistance.

Preferably, the instantaneous value of
resistance for each of the heating elements is
digitally computed from the instantaneous values
of voltage and current for the same heating
element. Also, preferably, the steps of obtaining instantaneous values of voltage and current
across each of the energized heating elements
includes the steps of sequentially tracking the
values of voltage and current for the energized
heating elements and retaining the values of
tracked voltage and current after tracking.

The present invention can also be used
to control the power received by the graphite heating elements in high temperature furnaces such as disclosed in U.S. Patent No. 4,117,252.

The objects, features and advantages of the present invention are readily apparent from the following detailed description of the best modes for carrying out the invention when taken in connection with the accompanying drawings.

BRIEF DESCRIPTION OF THE DRAWINGS

FIGURE 1 is a schematic side elevation view partially broken away, of a glass sheet processing system including a conveyor furnace whose heating chamber temperature is controlled in accordance with the present invention; and

FIGURE 2 is a schematic view of a computerized control system that can be utilized to carry out the present invention.

BEST MODE FOR CARRYING OUT THE INVENTION

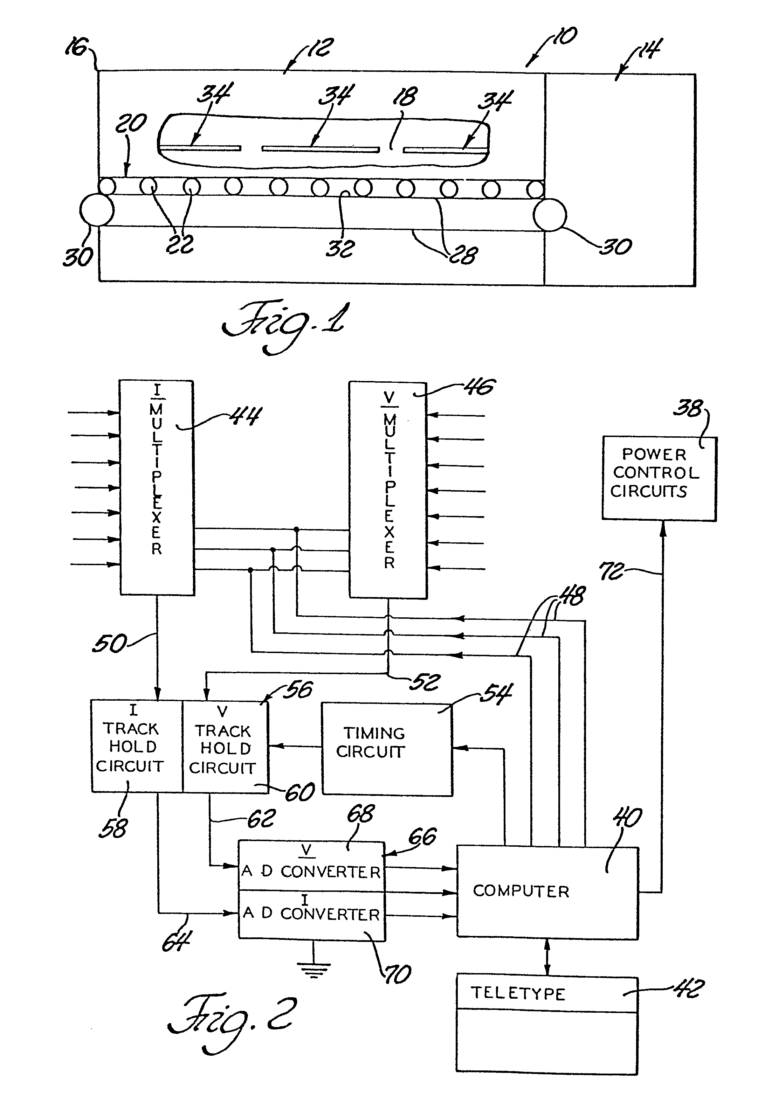

Referring to FIGURE 1 of the drawings, a glass sheet processing system indicated generally by reference numeral 10 is illustrated schematically and includes a heating furnace 12 constructed in accordance with the present invention and a processing station 14 for processing heated glass sheets to provide bending, bending and tempering, or filming, etc. The present invention can also be employed for heating other loads of sheet material such as fused silica.

The furnace 12 illustrated in FIGURE 1 includes a housing 16 defining a heating chamber 18 in which glass sheets are heated. A roller conveyor 20 of the furnace includes horizontally extending rolls 22 for conveying glass sheets through the heating chamber 18 for heating thereof from room temperature to a desired temperature for processing at the processing station 14. The present invention can also be employed in stationary furnaces.

Roller conveyor 20 of the furnace 11 illustrated in FIGURE 1 is preferably of the type disclosed by United States Patents 3,806,312; 3,907,132; 3,934,970; and 3,994,711 wherein a pair of continuous drive loops 28 respectively support and frictionally drive the opposite ends of the conveyor rolls 22. Drive Loops 28 are preferably embodied as toothed chains of the link type connected by pins and are received by associated toothed wheels 30 at opposite ends of the furnace 12 on each of its lateral sides. Driving of the toothed wheels 30 slidably moves an upper reach of each drive loop 28 over an associated support surface 32 located outside of the furnace heating chamber at the adjacent lateral side of the furnace. Preferably, a plurality of electric resistance elements 34 secured by T-shaped ceramic retainers (not shown) are supplied electrical power to provide heating of the glass sheets within the chamber 18 from above and below (not shown) the roller conveyor 20. A single element 34 may also be employed.

Each resistance heating element 34 preferably comprises a generally planar heating grid consisting of either a graphite, stainless
steel or other resistive element.  As is described in greater detail hereinbelow, each
heating element or heat source 34 also comprises
a sensor thereby lessening the need for rate,
reset, droop correction, etc.

Each electric resistance element 34
is coupled to a source of electrical power
pulses of alternate, opposite polarity, for
example, by parallel, oppositely poled SCRs
(not shown).  The sets of oppositely poled SCRs
are controlled by power control circuits 38 as
shown in FIGURE 2.

The heating of the glass sheets by the
electrical resistance elements 34 as the glass
sheets are being conveyed, is controlled by
maintaining the resistance of each of the heating elements at a predetermined value rather
by giving each of the elements 34 equal power
input.  In such a roller conveyor furnace, such
as furnace 12, the partially loaded heating
elements which extend beyond the glass edges will
overheat if these heating elements are given
the same power input as those heating elements
which are more fully loaded (for example, those
heating elements between which and beyond which
the glass sheets are located).

A set point or predetermined reference
value representing the resistance (desired
average heating temperature ) of each heating
element 34, is first prepared to calibrate each
heating element.  That is, each individual heating element 34 is energized to a desired

0078135

P-349                    - 10 -

temperature for heating the glass sheets. The
corresponding voltage and current is measured
and, consequently, the resistance is determined.

These set point resistance values can
then be input into a digital control computer
40 by means of a teletype unit 42. Each of the
set point resistance values can be stored in
internal memory of the computer 40 and can be
subsequently read out of the memory and set at
one input value to a comparator (also internal
to the computer 40). The other input to the
comparator is the resistance value computed
by the computer from the instantaneous readings
of voltage and current which are made for each
heating element.

In general, the control circuit shown
in FIGURE 2 sequentially monitors the different
values of current flowing through the current
transformers for each of the heating elements.
by means of a multiplexer 44 and also sequentially monitors the various voltage values appearing across each of the heating elements by
means of a multiplexer 46. The computer 40
periodically issues an address code along address
lines 48 corresponding to the particular heating
grid element to be monitored. The corresponding
analog value of current and voltage for the
chosen heating grid element appears along lines
50 and 52, respectively.

A conventional timing circuit 54 is also
controlled by the computer 40 to control track
and hold circuits 56 which includes a current track and hold circuit 58 and a voltage track and hold circuit 60. The timing circuit 54 incorporates within itself the various timing considerations and delays to eliminate any errors due to switching transients.

The track and hold circuits 56 track the values of current and voltage associated with the monitored heating element and retain the values of current and voltage value upon receiving the appropriate signal from the timing circuit 54. In this way the instantaneous values of the voltage drop (across each energized heating element) and current flow (through each of the energized heating elements) is obtained and appear on lines 62 and 64, respectively, leading to analog to digital converter circuits 66.

The converter circuits 66 include a voltage analog to digital converter 68 and a current analog to digital converter 70 which converts the analog signals of voltage and current, respectively, into a form which the computer 40 can understand and manipulate. The digital signals from the converter circuits 66 are used by the computer 40 to compute the resistance and therefore the temperature of the particular heating element which the computer 40 addresses along lines 48. This instantaneous value of resistance is compared by the comparator within the computer 40 with the corresponding set point value of resistance previously established for that particular heating element.

When the instantaneous value is greater than the set resistance value for the heating element presently being monitored, the computer 40 sends a signal along buss 72 to the power control circuits 38 to control the power input to the particular heating element being monitored. Each of the power control circuits 38 may simply comprise an on-off type control circuit, since there is no thermal delay between the heat source and sensor. Alternatively, the circuits 38 may utilize an error signal generated by the computer 40 which corresponds to the difference between the set point resistance and the instantaneous resistance to generate an appropriate control signal to vary the amount of power received by the particular heating grid being monitored. Other control functions may be performed by such control circuits and is within the capabilities of those skilled in this art.

In this way electrical power applied to the heating elements is quickly and automatically regulated in response to their instantaneous values of resistance to thereby maintain the resistance of each of the heating elements at its reference value of resistance. As previously mentioned, the average temperature of each of the heating elements is also controlled. Different amounts of electrical power are applied to the different heating elements depending upon the current load imposed on the heating elements by the moving glass sheets.

P-349                    - 13 -

The computer 40 sequentially controls the amount of power each particular heating element obtains to prevent overheating of the edges of glass by partially loaded heating elements which are heated beyond the glass edges. In this way, power input to each of the heating elements is varied depending upon the particular load requirements imposed by the glass sheets upon the heating element. Consequently, all areas of the heating elements are maintained at a constant temperature regardless of load, to maintain uniform glass heating and, the heat is controlled beyond the areas covered by the load.

While the best mode for carrying out the invention has been described in detail, those familiar with the art to which this invention relates will recognize various alternative designs and embodiments for practicing the invention as defined by the following claims.

P-349                    - 14 -

What is claimed is:

1.   A method of controlling the heating of sheet material in a furnace including a housing defining a heating chamber and having at least one electric resistive heating element supported by the housing within the heating chamber to heat the sheet material therein, the method comprising:

determining a reference value of resistance for the heating element when the heating element is heated to a desired heating temperature;

energizing the heating element;

obtaining an instantaneous value of the voltage drop across the energized heating element;

obtaining an instantaneous value of the current flow through the energized heating element;

correlating the instantaneous values of voltage and current for the heating element to obtain the instantaneous value of resistance for the heating element;

comparing the instantaneous resistance with its corresponding reference value of resistance; and

automatically regulating the electrical power applied to the heating element in response to its corresponding step of comparing to thereby maintain the resistance of the heating element at its reference value of resistance.

2. A method of controlling the heating of glass sheets in a sheet material furnace, the furnace including a housing defining a heating chamber and having at least two electric, generally planar, resistive heating elements supported by the housing within the heating chamber so that at least one planar surface of each heating element supplies heat to the sheet material inside the heating chamber, the method comprising:

determining a reference value of resistance for each of the heating elements when the heating elements are heated to a desired average heating temperature;

energizing the heating elements so that substantially the entire planar areas of the heating elements transfer heat into the heating chamber;

obtaining an instantaneous value of the voltage drop across each of the energized heating elements;

obtaining an instantaneous value of the current flow through each of the energized heating elements;

correlating the instantaneous values of voltage and current for the same heating element to obtain the instantaneous value of resistance for each of the heating elements;

comparing each of the instantaneous resistances with its corresponding reference value of resistance; and

automatically regulating the electrical

P-349                    - 16 -

power applied to each of the heating elements in response to its corresponding step of comparing to thereby maintain the resistance of each of said heating elements at its reference value of resistance.

3. The method as claimed in claim 2 wherein said step of regulating includes the step of alternately turning the power off and on to each of the heating elements.

4. The method as claimed in claim 2 wherein the heating elements are energized so that each heating element supplies heat energy to different areas of the same sheet material.

5. A method of maintaining a substantially uniform temperature within a glass sheet conveyor furnace as moving glass sheets are heated as the glass sheets move through the glass sheet conveyor furnace, the furnace including a housing defining a heating chamber, a roller conveyor including horizontally extending rolls for conveying glass sheets horizontally through the heating chamber for heating thereof, and having at least two electric resistive heating elements supported by the housing within the heating chamber on opposite sides of the roller conveyor to heat the glass sheets moving through the heating chamber, the method comprising:

determining a reference value of resistance for each of the heating elements when the heating elements are heated to their individual desired heating temperature wherein the amount of radiant energy applied to the top and bottom surfaces of the glass sheets is substantially equalized;

energizing the heating elements;

obtaining an instantaneous value of the voltage drop across each of the energized heating elements;

obtaining an instantaneous value of the current flow through each of the energized heating elements;

correlating the instantaneous values of voltage and current for the same heating element to obtain the instantaneous value of resistance for each of the heating elements;

comparing each of the instantaneous resistances with its corresponding reference value of resistance; and

automatically regulating the electrical power applied to each of the heating elements in response to its corresponding step of comparing to thereby maintain the resistance of each of said heating elements at its reference value of resistance.

6.    A method of controlling the heating of glass sheets in a glass sheet roller conveyor furnace, the furnace including a housing defining a heating chamber and having at least two electric resistive heating elements supported by the housing within the heating chamber to heat the glass sheets moving through the heating chamber, the method comprising:

determining a reference value of resistance for each of the heating elements when the heating

P-349                        - 18 -

elements are heated to a desired heating temperature;

storing the reference values of resistance;

sequentially obtaining an instantaneous
analog value of the voltage drop across each of
the energized heating elements;

converting the analog value of voltage
to a digital value;

sequentially obtaining an instantaneous
value of a current flow through each of the energized heating elements;

converting the analog value of current
to a digital value;

digitally computing the instantaneous
value of resistance for each of the heating elements from the instantaneous values of voltage
and current for the same heating elements;

comparing each of the instantaneous
resistances with its corresponding stored reference value of resistance; and

automatically regulating the electrical
power applied to each of the heating elements
in response to its corresponding step of comparing to thereby maintain the resistance of each
of said heating elements at its reference value
of resistance.

7. A method of controlling the heating
of glass sheets in a glass sheet roller conveyor
furnace, the furnace including a housing defining a heating chamber and having at least two
electric resistive heating elements supported
by the housing within the heating chamber to heat the glass sheets moving through the heating chamber, the method comprising:

determining a reference value of resistance for each of the heating elements when the heating elements are heated to a desired heating temperature;

energizing the heating elements;

sequentially tracking the value of the voltage drop across each of the energized heating elements;

retaining the value of each tracked voltage after tracking for a predetermined time period;

sequentially tracking the value of current through each of the energized heating elements;

retaining the value of each tracked current after tracking for a second predetermined time period;

correlating the retained values of voltage and current for the same heating element to obtain the instantaneous value of resistance for each of the heating elements;

comparing each of the instantaneous resistances with its corresponding reference value of resistance; and

automatically regulating the electrical power applied to each of the heating elements in response to its corresponding step of comparing to thereby maintain the resistance of each of said heating elements at its reference value of resistance.

0078135

Fig. 1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | C 03 B    29/04 |
| A | US-A-2 924 695   (ATKESON)<br>* the whole document * | 1 | G 05 D    23/24 |
| | --- | | |
| A | US-A-3 257 188   (MORGAN)<br>* the whole document * | 1 | |
| | --- | | |
| A,D | US-A-3 752 956   (CAHILL)<br>* the whole document * | 1 | |
| | ----- | | |

TECHNICAL FIELDS
SEARCHED (Int. Cl. ³)

C 03 B    25/00
C 03 B    27/00
C 03 B    29/00
G 05 D    23/00
G 01 R    27/00
G 01 R    31/00

The present search report has been drawn up for all claims

| Place of search<br>THE HAGUE | Date of completion of the search<br>19-01-1983 | Examiner<br>VAN DEN BOSSCHE W.L. |
|---|---|---|